# FASCICULE DE BREVET EUROPEEN

(11) **EP 4 070 525 B1**
(45) Date de publication et mention de la délivrance du brevet: **16.09.2026**
(21) Numéro de dépôt: 20828534.6
(22) Date de dépôt: 01.12.2020
(51) Int. Cl.: G06F 21/44, H04W 4/70, H04W 8/00, H04W 12/08, H04L 9/40

(54) **PROCÉDÉS D'AUTHENTIFICATION ET D'INTÉGRATION D'ÉQUIPEMENT UTILISATEUR DANS UN SYSTÈME D'INFORMATION, DISPOSITIFS ET PROGRAMMES D'ORDINATEURS CORRESPONDANTS**
VERFAHREN ZUM AUTHENTIFIZIEREN UND EINBINDEN VON BENUTZERGERÄTEN IN EIN INFORMATIONSSYSTEM, ENTSPRECHENDE VORRICHTUNGEN UND COMPUTERPROGRAMME
METHODS FOR AUTHENTICATING AND INTEGRATING USER EQUIPMENT INTO AN INFORMATION SYSTEM, CORRESPONDING DEVICES AND COMPUTER PROGRAMS

(30) Priorité: 04.12.2019 FR 1913725
(43) Date de publication de la demande: 12.10.2022
(73) Titulaire: Orange, 92130 Issy-les-Moulineaux (FR)
(72) Inventeur: ANNE, Matthieu, 92326 Châtillon Cedex (FR); BERLEMONT, Samuel, 92326 Châtillon Cedex (FR); MARTIN, Guilhem, 92326 Châtillon Cedex (FR)
(74) Mandataire: Vidon Brevets & Stratégie
(86) Numéro de dépôt international: PCT/FR2020/052232
(87) Numéro de publication internationale: WO 2021/111071

(56) Documents cités:
- WO-A1-2016/209589
- WO-A1-2019/156716
- US-A1- 2016 036 819

## Description

Le domaine de l'invention est celui de la gestion à distance des équipements utilisateurs par un système d'information d'un opérateur par l'intermédiaire d'un réseau de communication. Plus précisément, l'invention concerne l'intégration de nouveaux équipements utilisateurs au sein du système d'information d'un opérateur.

Un service de gestion à distance d'équipements utilisateurs par un système d'information d'un opérateur par l'intermédiaire d'un réseau de communication s'effectue dans un environnement sécurisé et de confiance afin de garantir la sécurité, la confidentialité et l'intégrité des données transitant via le réseau de communication et des données stockées dans des équipements appartenant à ce même réseau de communication. Un système d'information comprend l'ensemble des serveurs de gestion d'équipements utilisateurs. Ces serveurs de gestion d'équipements utilisateurs interagissent avec les équipements utilisateurs au travers d'une solution de gestion mise en place par l'opérateur.

Ainsi, l'intégration d'un nouvel équipement utilisateur au sein d'un système d'information s'effectue au moyen de protocoles de communication assurant l'authentification de l'équipement utilisateur à intégrer et garantissant l'intégrité et la confidentialité des messages échangés entre l'équipement utilisateur à intégrer et un serveur de gestion d'équipements utilisateurs situé dans le réseau de communication.

Cette solution repose sur le fait que les équipements utilisateurs à intégrer sont dotés, lors de leur fabrication, d'un certificat d'authentification fourni au fabricant par l'opérateur gérant le système d'information dans lequel les équipements utilisateurs sont destinés à être intégrés. Ainsi, au cours de la procédure d'intégration, l'équipement utilisateur transmet son certificat à un serveur de gestion d'équipements utilisateurs faisant partie du système d'information de l'opérateur. En l'absence d'un tel certificat, la procédure d'intégration de l'équipement utilisateur au système d'information est stoppée.

Un premier inconvénient d'une telle solution tient au fait qu'elle nécessite une logistique lourde et peu flexible afin d'être mise en œuvre. En effet, l'opérateur gérant le système d'information dans lequel les équipements utilisateurs sont destinés à être intégrés doit fournir les certificats aux différents fabricants d'équipements utilisateurs par un canal sécurisé.

Un autre inconvénient d'une telle solution réside dans le fait qu'un même opérateur gérant le système d'information dans lequel des équipements utilisateurs sont destinés à être intégrés ne peut fournir des certificats à un grand nombre de fabricants d'objets connectés limitant de fait le choix de ses utilisateurs quant aux objets connectés qu'ils pourraient souhaiter intégrer alors que le développement de ces objets connectés offre un choix de plus en plus varié en termes de fonctions mises en œuvre par ces objets connectés, ou en termes de design. Document US 2016/036819 est un document pertinent dans le domaine d'authentification et d'intégration de nouveaux équipements utilisateurs au sein d'un système d'information.

Il existe donc un besoin d'une technique d'authentification et d'intégration de nouveaux équipements utilisateurs au sein d'un système d'information ne présentant pas tout ou partie de ces inconvénients.

L'invention définie dans les revendications indépendantes, répond à ce besoin en proposant un procédé d'intégration d'au moins un équipement utilisateur d'un réseau local destiné à être intégré à un système d'information, ledit procédé étant mis en œuvre par un serveur interfaçant le réseau local et le système d'information et comprenant les étapes suivantes :
- transmission, à destination de l'équipement utilisateur, d'instructions relatives à au moins un test à effectuer par ledit équipement utilisateur en relation avec au moins un équipement utilisateur authentifié appartenant au réseau local, lesdites instructions étant déterminées en fonction de fonctions pouvant être exécutées par ledit équipement utilisateur et par ledit équipement utilisateur authentifié,
- lorsque les résultats du test sont concluants, transmission à destination de l'équipement utilisateur de paramètres de connexion à au moins un serveur de gestion d'équipements utilisateurs authentifiés du système d'information.

Une telle solution s'appuie sur un écosystème d'équipements utilisateurs déjà authentifiés auprès du système d'information de l'opérateur et présents dans le réseau local afin d'authentifier l'équipement utilisateur à intégrer dans le système d'information et ainsi autoriser son intégration dans le système d'information.

Afin d'assurer la sécurité du système d'information de l'opérateur, tant que l'équipement utilisateur n'est pas authentifié, ce dernier est autorisé à communiquer uniquement avec un serveur interfaçant le réseau local et le système d'information. Ainsi ce serveur intermédiaire contrôle tous les échanges de messages avec l'équipement utilisateur à intégrer. Il permet d'isoler l'équipement utilisateur à intégrer du reste du système d'information en charge des équipements intégrés et impliqués dans l'authentification de l'équipement utilisateur.

L'équipement utilisateur à intégrer transmet des informations relatives à au moins une fonction qu'il peut exécuter au serveur intermédiaire. Par exemple, lorsque l'équipement utilisateur est une lampe connectée, cette dernière peut s'allumer, s'éteindre, changer la couleur de la lumière émise, etc. toutes ces informations sont transmises au serveur intermédiaire qui les retransmet à un serveur de test.

Sur la base des informations relatives à l'équipement utilisateur transmises par le serveur intermédiaire au serveur de test et à des informations relatives à d'autres équipements utilisateurs du réseau local déjà authentifiés et intégrés au système d'information, le serveur de test transmet des instructions relatives à un test à effectuer par l'équipement utilisateur à intégrer. Dans l'exemple choisi, lorsque l'équipement utilisateur est une lampe connectée et un capteur de lumière connecté est déjà authentifié et intégré au système d'information, le serveur de test peut par exemple transmettre comme instructions à l'équipement utilisateur à intégrer de s'allumer et d'émettre une lumière verte pendant une durée donnée. Parallèlement, le capteur de lumière connecté capte l'émission de lumière produite par le serveur de test.

Les résultats du test sont remontés au serveur de test qui détermine s'ils sont concluants ou non. Si les résultats sont concluants, c'est-à-dire si le capteur de lumière a capté une séquence d'émission de lumière conforme aux instructions du serveur de test, alors l'équipement utilisateur est authentifié. Il est alors autorisé à se connecter à un serveur de gestion d'équipements utilisateurs authentifiés situé dans le système d'information de l'opérateur et est donc intégré au système d'information.

Selon une première caractéristique du procédé d'intégration, des informations relatives à au moins une fonction pouvant être exécutée par ledit équipement utilisateur sont reçues en réponse à une requête transmise audit équipement utilisateur.

Cela permet de découvrir les caractéristiques et les capacités de l'équipement utilisateur à intégrer au système d'information afin de déduire les tests à réaliser.

Selon une seconde caractéristique du procédé d'intégration, la transmission de la requête est déclenchée par la réception d'au moins une information de présence de l'équipement utilisateur dans le réseau local.

Ainsi, s'il est déterminé que l'équipement utilisateur n'est pas effectivement situé dans le réseau local, la procédure d'intégration est stoppée.

L'invention concerne également un procédé d'authentification d'au moins un équipement utilisateur d'un réseau local destiné à être intégré dans un système d'information, ledit procédé étant mis en œuvre par un serveur de test du système d'information et comprenant les étapes suivantes :
- réception d'informations relatives à au moins une fonction pouvant être exécutée par ledit équipement utilisateur,
- détermination d'instructions relatives à au moins un test à effectuer par ledit équipement utilisateur en relation avec au moins un équipement utilisateur authentifié appartenant audit réseau local en fonction de fonctions pouvant être exécutées par ledit équipement utilisateur et par ledit équipement utilisateur authentifié,
- transmission à destination de l'équipement utilisateur des instructions relatives audit au moins un test à effectuer,
- transmission, via un serveur de gestion d'équipements utilisateurs authentifiés du système d'information, à destination d'au moins un équipement utilisateur authentifié des instructions relatives audit au moins un test à effectuer
- authentification dudit équipement utilisateur sur la base de résultats de test reçus en provenance dudit équipement utilisateur et dudit au moins un équipement utilisateur authentifié.

Un tel procédé d'authentification utilise des équipements utilisateurs déjà authentifiés situés dans le réseau local afin d'authentifier l'équipement utilisateur à intégrer de manière sûre et sécurisée.

Dans une réalisation alternative du procédé d'intégration, celui-ci comprenant une étape de détermination d'au moins un paramètre de confiance associé à au moins un résultat de test.

Cela peut permettre de limiter l'accès de l'équipement utilisateur à certains services fournis via le système d'information.

Dans une variation de cette implémentation alternative du procédé d'authentification, le paramètre de confiance dépend de l'équipement utilisateur authentifié en relation avec lequel le test est effectué.

En effet, selon que les équipements utilisateurs déjà authentifiés l'ont été conformément au présent procédé d'authentification ou car ils ont été dotés d'un certificat lors de leur fabrication, le paramètre de confiance associé à au moins un résultat d'un test effectué n'est pas le même. Une valeur du paramètre de confiance associé au résultat d'un test effectué en relation avec un équipement utilisateur doté d'un certificat d'usine reflète un plus haut niveau de confiance qu'une valeur du paramètre de confiance associé au résultat d'un test effectué en relation avec un équipement utilisateur authentifiés conformément au présent procédé d'authentification.

L'invention a également pour objet un serveur interfaçant un réseau local et un système d'information, le serveur comprenant des moyens pour:
- transmettre, à destination d'au moins un équipement utilisateur, des instructions relatives à au moins un test à effectuer par ledit équipement utilisateur en relation avec au moins un équipement utilisateur authentifié appartenant au réseau local, lesdites instructions étant déterminées en fonction de fonctions pouvant être exécutées par ledit équipement utilisateur et par ledit équipement utilisateur authentifié,
- lorsque les résultats du test sont concluants, transmettre à destination de l'équipement utilisateur des paramètres de connexion à au moins un serveur de gestion d'équipements utilisateurs authentifiés du système d'information.

L'invention concerne encore un serveur de test capable d'authentifier au moins un équipement utilisateur d'un réseau local destiné à être intégré dans un système d'information, ledit serveur de test comprenant des moyens pour :
- recevoir des informations relatives à au moins une fonction pouvant être exécutée par ledit équipement utilisateur,
- déterminer des instructions relatives à au moins un test à effectuer par ledit équipement utilisateur en relation avec au moins un équipement utilisateur authentifié appartenant audit réseau local en fonction de fonctions pouvant être exécutées par ledit équipement utilisateur et par ledit équipement utilisateur authentifié,
- transmettre à destination de l'équipement utilisateur des instructions relatives audit au moins un test à effectuer,
- transmettre, via un serveur de gestion d'équipements utilisateurs authentifiés du système d'information, à destination d'au moins un équipement utilisateur authentifié des instructions relatives audit au moins un test à effectuer
- authentifier ledit équipement utilisateur sur la base de résultats de test reçus en provenance dudit équipement utilisateur et dudit au moins un équipement utilisateur authentifié.

L'invention vise également un support d'enregistrement lisible par un ordinateur sur lequel sont enregistrés des programmes d'ordinateur comprenant des instructions de code de programme pour l'exécution des étapes des procédés selon l'invention tels que décrits ci-dessus.

Un tel support d'enregistrement peut être n'importe quelle entité ou dispositif capable de stocker les programmes. Par exemple, le support peut comporter un moyen de stockage, tel qu'une ROM, par exemple un CD ROM ou une ROM de circuit microélectronique, ou encore un moyen d'enregistrement magnétique, par exemple une clé USB ou un disque dur.

D'autre part, un tel support d'enregistrement peut être un support transmissible tel qu'un signal électrique ou optique, qui peut être acheminé via un câble électrique ou optique, par radio ou par d'autres moyens, de sorte que les programmes d'ordinateur qu'il contient sont exécutables à distance. Les programmes selon l'invention peuvent être en particulier téléchargés sur un réseau par exemple le réseau Internet.

Alternativement, le support d'enregistrement peut être un circuit intégré dans lequel les programmes sont incorporés, le circuit étant adapté pour exécuter ou pour être utilisé dans l'exécution des procédés objets de l'invention précités.

D'autres buts, caractéristiques et avantages des procédés proposés apparaîtront plus clairement à la lecture de la description suivante, donnée à titre de simple exemple illustratif, et non limitatif, en relation avec les figures, parmi lesquelles :
- La figure 1 représente de manière schématique un système dans lequel les procédés proposés sont mis en œuvre,
- La figure 2 représente des étapes des procédés d'intégration et d'authentification mis en œuvre selon un mode de réalisation particulier,
- La figure 3 représente le serveur intermédiaire selon un mode de réalisation particulier,
- La figure 4 représente le serveur de test selon un mode de réalisation particulier.

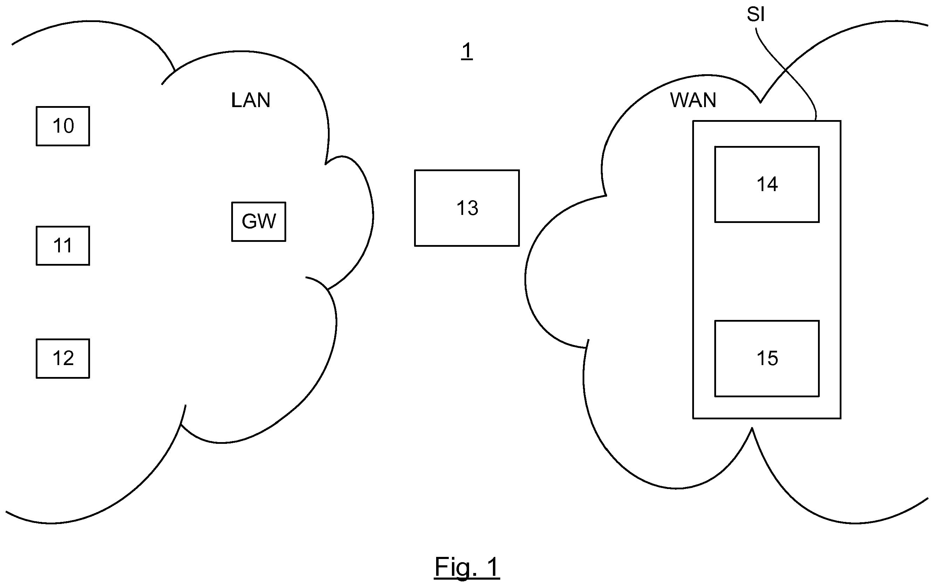

**La** **figure** 1 représente de manière schématique un système 1 dans lequel des procédés d'intégration et d'authentification sont mis en œuvre.

Le système 1 est constitué d'au moins un réseau local LAN (Local Area Network) et d'un système d'information SI de l'opérateur localisé dans un réseau de communication étendu WAN (Wide Area Network).

Le réseau local LAN comprend une passerelle GW permettant aux équipements utilisateurs présents dans le réseau local LAN d'échanger des données avec des équipements distants situés dans le réseau de communication. Plusieurs équipements utilisateurs 10, 11, 12 sont situés dans le réseau local LAN. Les équipements utilisateurs 11 et 12 ont déjà été authentifiés et sont intégrés au système d'information SI. L'équipement utilisateur 11 a été authentifié au moyen des procédés proposés alors que l'équipement utilisateur 12 est doté d'un certificat d'usine. L'équipement utilisateur 10 n'est pas doté d'un certificat d'usine et un utilisateur du réseau local LAN souhaite l'intégrer au système d'information SI, afin de permettre une gestion à distance.

Les équipements utilisateurs 10, 11, 12 peuvent être par exemple des objets connectés tels que des capteurs, des lampes, des interrupteurs ou encore des téléphones mobiles, des tablettes, des décodeurs TV ou set-top-box, des enceintes connectées, des équipements électroménagers connectés, etc.

Un serveur 13, dit serveur intermédiaire, interface le réseau local LAN avec le réseau de communication WAN.

Le système d'information SI de l'opérateur comprend entre autres un serveur de test 14 et au moins un serveur de gestion 15 d'équipements utilisateurs 11, 12 authentifiés. Les échanges entre le serveur de gestion 15 et un équipement utilisateur authentifié reposent sur un protocole qui décrit les méthodes implémentées par le serveur de gestion ainsi que l'équipement utilisateur, composant logiciel implémenté sur l'équipement, qui se conforment tous les deux aux spécifications liées au protocole. Un exemple d'un tel protocole est CWMP - pour *CPE WAN Management Protocol -* défini dans le rapport technique TR-069, spécifié par le Broadband Forum. Par ailleurs, les fonctionnalités de l'équipement utilisateur sont découvrables au moyen de ce protocole, à travers par exemple du modèle de données défini dans le rapport technique TR-181 pour CWMP, spécifié par le Broadband Forum. Le serveur de gestion 15 exécute un ensemble de fonctions d'administration et de maintenance d'un équipement utilisateur, telles que des mises à jour du micro-logiciel ou des reconfigurations.

Dans un mode de réalisation, le serveur intermédiaire 13 et le serveur de test 14 sont des composants fonctionnels embarqués dans un même équipement du système d'information SI.

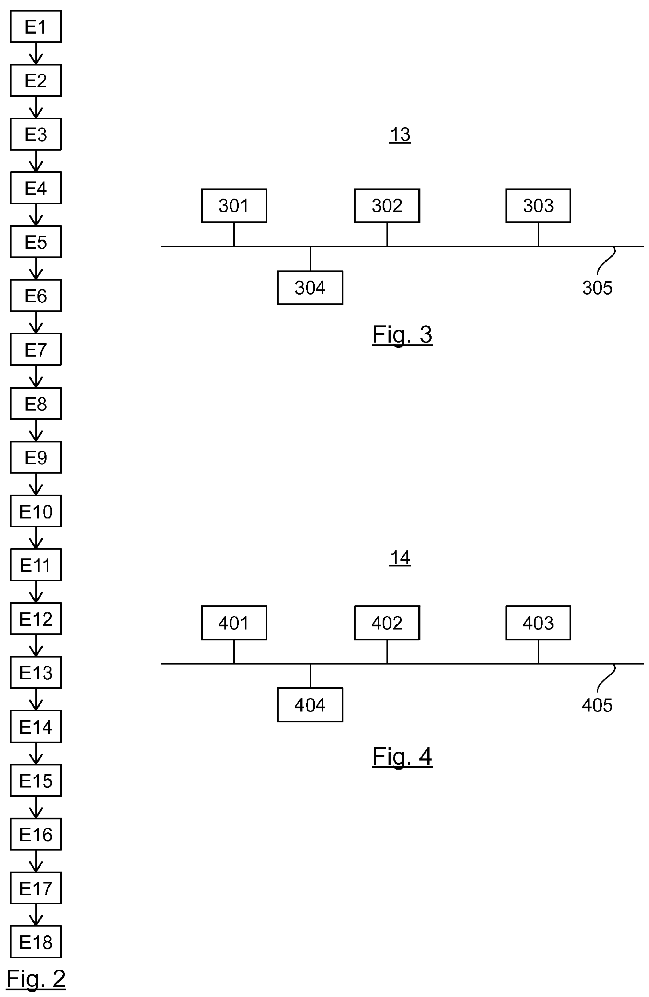

**La** **figure 2** représente des étapes des procédés d'intégration et d'authentification dans des modes de réalisation particuliers afin d'authentifier un équipement utilisateur 10 et ensuite de l'intégrer dans le système d'information de l'opérateur SI.

Dans une étape E1, l'équipement utilisateur 10 émet un message MSG1 à destination de la passerelle GW afin d'initier un procédé d'intégration dans le système d'information SI. Un tel message MSG1 est par exemple un message DHCP *(Dynamic Host Configuration Protocol* ou en français protocole de configuration dynamique des hôtes) du type DHCPDiscovery.

Dans une étape E2, la passerelle GW détermine que l'équipement utilisateur 10 n'est pas authentifié et transmet un message MSG2 à destination de l'équipement utilisateur comprenant des informations de connexion à un serveur d'amorçage (non représenté sur les figures) situé dans le réseau de communication WAN.

Ainsi, le message MSG2 est par exemple est un message du type DHCPOffer avec une option spécifique. Par exemple, cette option peut être DHCPv6 Vendor Class Option 16 (si l'équipement utilisateur supporte IPv6), DHCP Vendor Class Identifier Option 60, ou bien encore DHCP V-I Vendor Class Option 124.

Dans un mode de réalisation particulier, l'équipement utilisateur 10 est configuré pour mémoriser les informations de connexion à un serveur d'amorçage au moyen d'une interface locale (telle que définie dans le rapport technique TR-064 pour le protocole CWMP, spécifié par le Broadband Forum).

Dans une étape E3, l'équipement utilisateur 10 transmet dans un nouveau message MSG1', destiné au serveur d'amorçage, une demande d'initiation d'une intégration dans le système d'information SI.

Dans une étape E4, le serveur d'amorçage transmet un message MSG3 à l'équipement utilisateur 10 comprenant des informations de connexion au serveur intermédiaire 13, des informations de connexion à un premier module de contrôle MC1 (non représenté sur les figures) situé dans le réseau local LAN et des informations de connexion à un deuxième module de contrôle MC2 (non représenté sur les figures) situé dans le réseau de communication WAN.

Dans un mode de réalisation particulier, le message MSG3 ne comprend pas les informations de connexion. Dans ce cas, le serveur intermédiaire 13 et le serveur de gestion 15 partagent une même adresse IP et la redirection est effectuée par un composant dans le système d'information SI. Ce composant vérifie si l'équipement utilisateur 10 est authentifié pour rediriger la communication vers le serveur de gestion 15, et dans le cas contraire vers le serveur intermédiaire 13.

Au cours d'une étape E5, l'équipement utilisateur 10 transmet une première demande de connexion à destination du premier module de contrôle MC1. Parallèlement, l'équipement utilisateur 10 transmet une deuxième demande de connexion à destination du deuxième module de contrôle MC2.

Dans une étape E6, le premier module de contrôle MC1 et le deuxième module de contrôle MC2 déterminent si l'équipement utilisateur 10 est effectivement situé dans le réseau local LAN. Une telle détermination consiste par exemple à vérifier que l'équipement utilisateur 10 est connecté à un point d'accès Wi-Fi embarqué dans la passerelle GW.

S'il est déterminé, par au moins l'un du premier MC1 ou du deuxième MC2 module de contrôle, que l'équipement utilisateur 10 n'est pas situé dans le réseau local LAN, l'intégration est arrêtée car l'équipement utilisateur 10 peut potentiellement compromettre la sécurité du réseau local LAN et du système d'information SI. Dans un tel cas de figure, l'utilisateur du LAN est informé de la situation.

S'il est déterminé, par le premier ou le deuxième module de contrôle, que l'équipement utilisateur 10 est situé dans le réseau local LAN, le serveur intermédiaire 13 en est informé dans une étape E7, par exemple par la réception d'au moins une information de présence de l'équipement utilisateur 10 dans le réseau local LAN.

Dans une étape E8, le serveur intermédiaire 13 transmet à l'équipement utilisateur 10 une requête RQ1 en transmission d'informations relatives à au moins une fonction pouvant être exécutée par l'équipement utilisateur 10. Par exemple, lorsque l'équipement utilisateur 10 est une lampe connectée, cette dernière peut s'allumer, s'éteindre, changer la couleur de la lumière émise, etc. Ainsi les fonctions pouvant être exécutées par l'équipement utilisateur 10 sont : émettre une lumière, éteindre la lumière, changer la couleur de la lumière. Dans un autre exemple, lorsque l'équipement utilisateur 10 est une enceinte connectée, cette dernière peut jouer de la musique, s'éteindre, changer le volume du son, etc. Ainsi les fonctions pouvant être exécutées par l'équipement utilisateur 10 sont : émettre un son, couper le son, changer le volume du son, etc.

Dans une étape E9, l'équipement utilisateur 10 transmet un message MSG4 au serveur intermédiaire 13 comprenant une liste des fonctions qu'il peut exécuter.

Dans une étape E10, le serveur intermédiaire 13 transmet au serveur de test 14 la liste des fonctions que l'équipement utilisateur 10 peut exécuter.

Dans une étape E11, le serveur de test 14 détermine des instructions relatives à au moins un test à effectuer par l'équipement utilisateur 10 en relation avec au moins un équipement utilisateur authentifié 11 ou 12 en fonction de fonctions pouvant être exécutées par les trois équipement utilisateur 10, 11, 12.

Connaissant un identifiant du réseau local LAN dans lequel l'équipement utilisateur 10 se situe, le serveur de test 14 identifie les équipements utilisateurs authentifiés 11, 12 présents dans le réseau local LAN. Sur la base des fonctions pouvant être exécutées par l'équipement utilisateur 10 et des fonctions pouvant être exécutées par les équipements utilisateurs authentifiés 11, 12, lesquelles sont stockées dans une mémoire du serveur de test 14, le serveur de test 14 sélectionne au moins un équipement utilisateur authentifié 11 ou 12 avec lequel l'équipement utilisateur 10 effectue le test. Un test est toujours effectué par un couple d'équipements utilisateurs dont un premier membre est l'équipement utilisateur 10 et le deuxième membre est un équipement utilisateur authentifié.

Dans une étape E12, le serveur de test 14 transmet, via le serveur intermédiaire 13, un message MSG5 à destination de l'équipement utilisateur 10 comprenant les instructions relatives au test à effectuer.

Dans une étape E13, le serveur de test 14 transmet, via le serveur de gestion 15, un message MSG6 à destination de l'équipement utilisateur authentifié 11 comprenant les instructions relatives au test à effectuer.

Dans l'exemple choisi, lorsque l'équipement utilisateur 10 est une lampe connectée et l'équipement utilisateur authentifié 11 est un capteur de lumière, le serveur de test 14 peut par exemple transmettre comme instructions à l'équipement utilisateur 10 de s'allumer et d'émettre une lumière verte pendant une durée donnée. Parallèlement, l'équipement utilisateur authentifié 11 reçoit comme instructions de capter l'émission d'une lumière verte pendant une durée donnée.

Dans une étape E14, le serveur de test 14 reçoit, via le serveur intermédiaire 13, les résultats du test effectué par l'équipement utilisateur 10. Ces résultats peuvent consister en un message indiquant que l'équipement utilisateur 10 a exécuté les instructions reçues.

Dans une étape E15, le serveur de test 14 reçoit, via le serveur de gestion 15, les résultats du test effectué par l'équipement utilisateur authentifié 11. Ces résultats sont par exemple un message comprenant des informations décrivant les phénomènes captés par l'équipement utilisateur authentifié 11 durant le test, dans l'exemple choisi la période donnée.

Dans un mode de réalisation de l'invention, le serveur de test 14 associe un paramètre de confiance au résultat du test effectué en fonction de l'équipement utilisateur authentifié 11 ou 12 en relation avec lequel le test a été effectué.

En effet, selon que les équipements utilisateurs déjà authentifiés l'ont été conformément au présent procédé d'authentification pour l'équipement utilisateur 11, ou car ils ont été dotés d'un certificat lors de leur fabrication, pour l'équipement utilisateur 12, le paramètre de confiance associé au résultat du test effectué n'est pas le même. Une valeur du paramètre de confiance associé au résultat du test effectué en relation avec l'équipement utilisateur 12 doté d'un certificat d'usine reflète un plus haut niveau de confiance qu'une valeur du paramètre de confiance associé au résultat du test effectué en relation avec l'équipement utilisateur 11 authentifié conformément au présent procédé d'authentification.

Dans une étape E16, le serveur de test 14 authentifie l'équipement utilisateur 10 sur la base des résultats de test reçus. Ainsi, lorsque les résultats de l'équipement utilisateur 10 indiquent que ce dernier a exécuté les instructions reçues et que les résultats de l'équipement utilisateur 11 indiquent que les phénomènes captés par l'équipement utilisateur authentifié 11 correspondent aux instructions qui ont été transmises, le serveur de test 14 authentifie l'équipement utilisateur 10. Dans le cas contraire, l'équipement utilisateur 10 n'est pas authentifié et l'utilisateur du réseau local LAN en est informé.

Dans une étape E17, le serveur de test 14 transmet à destination de l'équipement utilisateur 10 et via le serveur intermédiaire 13 un message MSG7 comprenant des paramètres de connexion au serveur de gestion 15.

A réception du message MSG7, l'équipement utilisateur 10 transmet une demande de connexion au serveur de gestion 15 sur la base des paramètres de connexion compris dans le message MSG7, dans une étape E18. Lorsque l'équipement utilisateur 10 est effectivement connecté au serveur de gestion 15, il est intégré au système d'information.

**La** **figure 3** représente le serveur intermédiaire 13 selon un mode de réalisation. Un tel serveur intermédiaire 13 est configuré pour mettre en œuvre les différents modes de réalisation des procédés proposés décrits en référence à la figure 2.

Un serveur intermédiaire 13 peut comprendre au moins un processeur matériel 301, une unité de stockage 302, une interface 303, et au moins une interface de réseau 304 qui sont connectés entre eux au travers d'un bus 305. Bien entendu, les éléments constitutifs du serveur intermédiaire 13 peuvent être connectés au moyen d'une connexion autre qu'un bus.

Le processeur 301 commande les opérations du serveur intermédiaire 13. L'unité de stockage 302 stocke au moins un programme pour la mise en œuvre de la méthode selon un mode de réalisation à exécuter par le processeur 301, et diverses données, telles que des paramètres utilisés pour des calculs effectués par le processeur 301, des données intermédiaires de calculs effectués par le processeur 301, etc. Le processeur 301 peut être formé par tout matériel ou logiciel connu et approprié, ou par une combinaison de matériel et de logiciel. Par exemple, le processeur 301 peut être formé par un matériel dédié tel qu'un circuit de traitement, ou par une unité de traitement programmable telle qu'une unité centrale de traitement *(Central Processing Unit)* qui exécute un programme stocké dans une mémoire de celui-ci.

L'unité de stockage 302 peut être formée par n'importe quel moyen approprié capable de stocker le programme ou les programmes et des données d'une manière lisible par un ordinateur. Des exemples d'unité de stockage 302 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface 303 fournit une interface entre le serveur intermédiaire 13 et l'équipement utilisateur 10 à intégrer.

Au moins une interface réseau 304 fournit une connexion entre le serveur intermédiaire 13 et le premier module de contrôle MC1, le deuxième module de contrôle MC2, le serveur de test 14 et le serveur de gestion 15.

**La** **figure 4** représente le serveur de test 14 selon un mode de réalisation. Un tel serveur de test 14 est apte à mettre en œuvre les différents modes de réalisation de la méthode décrite en référence à la figure 2.

Un serveur de test 14 peut comprendre au moins un processeur matériel 401, une unité de stockage 402, une interface 403, et au moins une interface de réseau 404 qui sont connectés entre eux au travers d'un bus 405. Bien entendu, les éléments constitutifs du serveur de test 14 peuvent être connectés au moyen d'une connexion autre qu'un bus.

Le processeur 401 commande les opérations du serveur de test 14. L'unité de stockage 402 stocke au moins un programme pour la mise en œuvre de la méthode selon un mode de réalisation à exécuter par le processeur 401, et diverses données, telles que des paramètres utilisés pour des calculs effectués par le processeur 401, des données intermédiaires de calculs effectués par le processeur 401, etc. Le processeur 401 peut être formé par tout matériel ou logiciel connu et approprié, ou par une combinaison de matériel et de logiciel. Par exemple, le processeur 401 peut être formé par un matériel dédié tel qu'un circuit de traitement, ou par une unité de traitement programmable telle qu'une unité centrale de traitement *(Central Processing Unit)* qui exécute un programme stocké dans une mémoire de celui-ci.

L'unité de stockage 402 peut être formée par n'importe quel moyen approprié capable de stocker le programme ou les programmes et des données d'une manière lisible par un ordinateur. Des exemples d'unité de stockage 402 comprennent des supports de stockage non transitoires lisibles par ordinateur tels que des dispositifs de mémoire à semi-conducteurs, et des supports d'enregistrement magnétiques, optiques ou magnéto-optiques chargés dans une unité de lecture et d'écriture.

L'interface 403 fournit une interface entre le serveur de test 14 et le serveur de gestion 15.

Au moins une interface réseau 404 fournit une connexion entre le serveur de test 14 et le serveur intermédiaire 13.

## Revendications

1. Procédé d'intégration d'au moins un équipement utilisateur (10) d'un réseau local (LAN) destiné à être intégré dans un système d'information (SI), ledit procédé étant mis en œuvre par un serveur (13) interfaçant le réseau local (LAN) et le système d'information (SI) et comprenant les étapes suivantes :
- transmission (E10), à un serveur de test (14) du système d'information (SI), d'informations relatives à au moins une fonction pouvant être exécutée par ledit équipement utilisateur, reçues en provenance dudit équipement utilisateur ;
- réception, en provenance dudit serveur de test, d'instructions associées à ladite au moins une fonction et relatives à au moins un test à effectuer par ledit équipement utilisateur (10) en relation avec au moins un équipement utilisateur authentifié (11, 12) appartenant au réseau local (LAN) ;
- transmission (E12), à destination de l'équipement utilisateur (10), desdites instructions relatives à au moins un test à effectuer par ledit équipement utilisateur (10) ;
- réception, en provenance de l'équipement utilisateur (10), d'au moins un résultat dudit au moins un test effectué par ledit équipement utilisateur (10) ;
- transmission dudit au moins un résultat audit serveur de test ; réception, en provenance dudit serveur de test, de paramètres de connexion à au moins un serveur de gestion (15) d'équipements utilisateurs authentifiés du système d'information (SI) ;
- transmission (E17) à destination de l'équipement utilisateur (10) desdits paramètres de connexion.

2. Procédé d'intégration selon la revendication 1, dans lequel lesdites informations relatives à au moins une fonction pouvant être exécutée par ledit équipement utilisateur sont reçues (E9) en réponse à une requête (RQ1) transmise audit équipement utilisateur.

3. Procédé d'intégration selon la revendication 2, dans lequel la transmission (E9) de la requête (RQ1) est déclenchée par la réception (E7) d'au moins une information de présence de l'équipement utilisateur (10) dans le réseau local (LAN).

4. Procédé d'authentification d'au moins un équipement utilisateur (10) d'un réseau local (LAN) destiné à être intégré dans un système d'information (SI), ledit procédé étant mis en œuvre par un serveur de test (14) du système d'information (SI) et comprenant les étapes suivantes :
- réception (E10), en provenance d'un serveur (13) interfaçant le réseau local (LAN) et le système d'information (SI), d'informations relatives à au moins une fonction pouvant être exécutée par ledit équipement utilisateur (10),
- détermination (E11) d'instructions associées à ladite au moins une fonction et relatives à au moins un test à effectuer par ledit équipement utilisateur (10) en relation avec au moins un équipement utilisateur authentifié (11, 12) appartenant audit réseau local (LAN) en fonction de fonctions pouvant être exécutées par ledit équipement utilisateur (10) et par ledit équipement utilisateur authentifié (11, 12),
- transmission (E12), via ledit serveur (13) interfaçant le réseau local (LAN) et le système d'information (SI), à destination de l'équipement utilisateur (10) des instructions relatives audit au moins un test à effectuer,
- transmission (E13), via un serveur de gestion (15) d'équipements utilisateurs authentifiés du système d'information (SI), à destination d'au moins un équipement utilisateur authentifié (11, 12) des instructions relatives audit au moins un test à effectuer
- authentification (E16) dudit équipement utilisateur (10) sur la base de résultats de test reçus en provenance dudit équipement utilisateur (10) via ledit serveur (13) interfaçant le réseau local (LAN) et le système d'information (SI) et de résultats de test reçus en provenance dudit au moins un équipement utilisateur authentifié (11, 12) via ledit serveur de gestion (15), comprenant, lorsque les résultats du test sont concluants, la transmission, via ledit serveur (13) interfaçant le réseau local (LAN) et le système d'information (SI), à destination de l'équipement utilisateur (10), de paramètres de connexion audit au moins un serveur de gestion (15) d'équipements utilisateurs authentifiés du système d'information (SI).

5. Procédé d'authentification selon la revendication 4, comprenant une étape de détermination d'au moins un paramètre de confiance associé à au moins un résultat de test.

6. Procédé d'authentification selon la revendication 5, dans lequel le paramètre de confiance dépend de l'équipement utilisateur authentifié en relation avec lequel le test est effectué.

7. Serveur interfaçant (13) un réseau local (LAN) et un système d'information (SI), le serveur (13) comprenant des moyens pour:
- transmettre, à un serveur de test (14) du système d'information (SI), des informations relatives à au moins une fonction pouvant être exécutée par un équipement utilisateur, reçues en provenance dudit équipement utilisateur ;
- recevoir, en provenance dudit serveur de test, des instructions associées à ladite au moins une fonction et relatives à au moins un test à effectuer par ledit équipement utilisateur (10) en relation avec au moins un équipement utilisateur authentifié (11, 12) appartenant au réseau local (LAN) ;
- transmettre, à destination dudit moins un équipement utilisateur (10), lesdites instructions relatives à au moins un test à effectuer par ledit équipement utilisateur (10 ;
- recevoir, en provenance de l'équipement utilisateur (10), au moins un résultat dudit au moins un test effectué par ledit équipement utilisateur (10) ;
- transmettre ledit au moins un résultat audit serveur de test ;
- recevoir, en provenance dudit serveur de test, des paramètres de connexion à au moins un serveur de gestion (15) d'équipements utilisateurs authentifiés du système d'information (SI) ;
- transmettre à destination de l'équipement utilisateur (10) lesdits paramètres de connexion.

8. Serveur de test (14) capable d'authentifier au moins un équipement utilisateur (10) d'un réseau local (LAN) destiné à être intégré dans un système d'information (SI), ledit serveur de test (14) appartenant au système d'information (SI)et comprenant des moyens pour :
- recevoir, en provenance d'un serveur (13) interfaçant le réseau local (LAN) et le système d'information (SI), des informations relatives à au moins une fonction pouvant être exécutée par ledit équipement utilisateur (10),
- déterminer des instructions associées à ladite au moins une fonction et relatives à au moins un test à effectuer par ledit équipement utilisateur (10) en relation avec au moins un équipement utilisateur authentifié (11, 12) appartenant audit réseau local (LAN) en fonction de fonctions pouvant être exécutées par ledit équipement utilisateur (10) et par ledit équipement utilisateur authentifié (11, 12),
- transmettre, via ledit serveur (13) interfaçant le réseau local (LAN) et le système d'information (SI), à destination de l'équipement utilisateur (10) des instructions relatives audit au moins un test à effectuer,
- transmettre, via un serveur de gestion (15) d'équipements utilisateurs authentifiés du système d'information (SI), à destination d'au moins un équipement utilisateur authentifié (11, 12) des instructions relatives audit au moins un test à effectuer
- authentifier ledit équipement utilisateur (10) sur la base de résultats de test reçus en provenance dudit équipement utilisateur (10) via ledit serveur (13) interfaçant le réseau local (LAN) et le système d'information (SI) et de résultats de test reçus en provenance dudit au moins un équipement utilisateur authentifié (11, 12), comprenant, lorsque les résultats du test sont concluants, la transmission, via ledit serveur (13) interfaçant le réseau local (LAN) et le système d'information (SI), à destination de l'équipement utilisateur (10), de paramètres de connexion audit au moins un serveur de gestion (15) d'équipements utilisateurs authentifiés du système d'information (SI).

9. Produit programme d'ordinateur comprenant des instructions de code de programme pour la mise en œuvre d'un procédé selon la revendication 1, lorsqu'il est exécuté par un processeur

10. Produit programme d'ordinateur comprenant des instructions de code de programme pour la mise en œuvre d'un procédé selon la revendication 4, lorsqu'il est exécuté par un processeur.

## Patentansprüche

1. Verfahren zum Einbinden mindestens eines Benutzergeräts (10) eines lokalen Netzwerks (LAN), das dazu bestimmt ist, in ein Informationssystem (SI) eingebunden zu werden, wobei das Verfahren von einem Server (13) implementiert wird, der das lokale Netzwerk (LAN) und das Informationssystem (SI) verbindet, und die folgenden Schritte umfasst:
- Übertragen (E10) von Informationen, die sich auf mindestens eine Funktion beziehen, die von dem Benutzergerät ausgeführt werden kann, und die von dem Benutzergerät empfangen werden, an einen Testserver (14) des Informationssystems (SI);
- Empfangen von Anweisungen, die der mindestens einen Funktion zugeordnet sind und sich auf mindestens einen Test beziehen, der von dem Benutzergerät (10) in Verbindung mit mindestens einem zu dem lokalen Netzwerk (LAN) gehörenden authentifizierten Benutzergerät (11, 12) durchzuführen ist, von dem Testserver;
- Übertragen (E12) der Anweisungen, die sich auf mindestens einen von dem Benutzergerät durchzuführenden Test beziehen (10), an das Benutzergerät (10);
- Empfangen mindestens eines Ergebnisses des mindestens einen von dem Benutzergerät (10) durchgeführten Tests von dem Benutzergerät (10);
- Übertragen des mindestens einen Ergebnisses an den Testserver;
- Empfangen von Verbindungsparametern zur Verbindung mit mindestens einem Verwaltungsserver (15) zur Verwaltung von authentifizierten Benutzergeräten des Informationssystems (SI) von dem Testserver;
- Übertragen (E17) der Verbindungsparameter an das Benutzergerät (10).

2. Verfahren zum Einbinden nach Anspruch 1, wobei die Informationen, die sich auf mindestens eine Funktion beziehen, die von dem Benutzergerät ausgeführt werden kann, als Antwort auf eine Anforderung (RQ1) empfangen werden (E9), die an das Benutzergerät übertragen wird.

3. Verfahren zum Einbinden nach Anspruch 2, wobei das Übertragen (E9) der Anforderung (RQ1) durch das Empfangen (E7) mindestens einer Information zur Anwesenheit des Benutzergeräts (10) in dem lokalen Netzwerk (LAN) ausgelöst wird.

4. Verfahren zum Authentifizieren mindestens eines Benutzergeräts (10) eines lokalen Netzwerks (LAN), das dazu bestimmt ist, in ein Informationssystem (SI) eingebunden zu werden, wobei das Verfahren von einem Testserver (14) des Informationssystems (SI) implementiert wird und die folgenden Schritte umfasst:
- Empfangen (E10) von Informationen, die sich auf mindestens eine Funktion beziehen, die von dem Benutzergerät (10) ausgeführt werden kann, von einem Server (13), der das lokale Netzwerk (LAN) und das Informationssystem (SI) verbindet,
- Bestimmen (E11) von Anweisungen, die der mindestens einen Funktion zugeordnet sind und sich auf mindestens einen Test beziehen, der von dem Benutzergerät (10) in Verbindung mit mindestens einem zu dem lokalen Netzwerk (LAN) gehörenden authentifizierten Benutzergerät (11, 12) durchzuführen ist, in Abhängigkeit von Funktionen, die von dem Benutzergerät (10) und von dem authentifizierten Benutzergerät (11, 12) ausgeführt werden können,
- Übertragen (E12) der Anweisungen, die sich auf den mindestens einen durchzuführenden Test beziehen, über den Server (13), der das lokale Netzwerk (LAN) und das Informationssystem (SI) verbindet, an das Benutzergerät (10),
- Übertragen (E13) der Anweisungen, die sich auf den mindestens einen durchzuführenden Test beziehen, über einen Verwaltungsserver (15) zur Verwaltung von authentifizierten Benutzergeräten des Informationssystems (SI) an mindestens ein authentifiziertes Benutzergerät (11, 12)
- Authentifizieren (E16) des Benutzergeräts (10) auf der Grundlage von Testergebnissen, die von dem Benutzergerät (10) über den Server (13), der das lokale Netzwerk (LAN) und das Informationssystem (SI) verbindet, empfangen werden, und von Testergebnissen, die von dem mindestens einen authentifizierten Benutzergerät (11, 12) über den Verwaltungsserver (15) empfangen werden, umfassend, wenn die Ergebnisse des Tests schlüssig sind, das Übertragen von Verbindungsparametern zur Verbindung mit dem mindestens einen Verwaltungsserver (15) zur Verwaltung von authentifizierten Benutzergeräten des Informationssystems (SI) über den Server (13), der das lokale Netzwerk (LAN) und das Informationssystem (SI) verbindet, an das Benutzergerät (10).

5. Verfahren zum Authentifizieren nach Anspruch 4, umfassend einen Schritt des Bestimmens mindestens eines Konfidenzparameters, der mindestens einem Testergebnis zugeordnet ist.

6. Verfahren zum Authentifizieren nach Anspruch 5, wobei der Konfidenzparameter von dem authentifizierten Benutzergerät abhängt, in Verbindung mit welchem der Test durchgeführt wird.

7. Server (13), ein lokales Netzwerk (LAN) und ein Informationssystem (SI) verbindet, wobei der Server (13) Mittel umfasst zum:
- Übertragen von Informationen, die sich auf mindestens eine Funktion beziehen, die von einem Benutzergerät ausgeführt werden kann, und die von dem Benutzergerät empfangen werden, an einen Testserver (14) des Informationssystems (SI);
- Empfangen von Anweisungen, die der mindestens einen Funktion zugeordnet sind und sich auf mindestens einen Test beziehen, der von dem Benutzergerät (10) in Verbindung mit mindestens einem zu dem lokalen Netzwerk (LAN) gehörenden authentifizierten Benutzergerät (11, 12) durchzuführen ist, von dem Testserver;
- Übertragen der Anweisungen, die sich auf mindestens einen von dem Benutzergerät (10) durchzuführenden Test beziehen, an das mindestens eine Benutzergerät (10);
- Empfangen mindestens eines Ergebnisses des mindestens einen von dem Benutzergerät (10) durchgeführten Tests von dem Benutzergerät (10);
- Übertragen des mindestens einen Ergebnisses an den Testserver;
- Empfangen von Verbindungsparametern zur Verbindung mit mindestens einem Verwaltungsserver (15) zur Verwaltung von authentifizierten Benutzergeräten des Informationssystems (SI) von dem Testserver;
- Übertragen der Verbindungsparameter an das Benutzergerät (10).

8. Testserver (14), der in der Lage ist, mindestens ein Benutzergerät (10) eines lokalen Netzwerks (LAN), das dazu bestimmt ist, in ein Informationssystem (SI) eingebunden zu werden, zu authentifizieren, wobei der Testserver (14) zu dem Informationssystem (SI) gehört und Mittel umfasst zum:
- Empfangen von Informationen, die sich auf mindestens eine Funktion beziehen, die von dem Benutzergerät (10) ausgeführt werden kann, von einem Server (13), der das lokale Netzwerk (LAN) und das Informationssystem (SI) verbindet,
- Bestimmen von Anweisungen, die der mindestens einen Funktion zugeordnet sind und sich auf mindestens einen Test beziehen, der von dem Benutzergerät (10) in Verbindung mit mindestens einem zu dem lokalen Netzwerk (LAN) gehörenden authentifizierten Benutzergerät (11, 12) durchzuführen ist, in Abhängigkeit von Funktionen, die von dem Benutzergerät (10) und von dem authentifizierten Benutzergerät (11, 12) ausgeführt werden können,
- Übertragen von Anweisungen, die sich auf den mindestens einen durchzuführenden Test beziehen, über den Server (13), der das lokale Netzwerk (LAN) und das Informationssystem (SI) verbindet, an das Benutzergerät (10),
- Übertragen von Anweisungen, die sich auf den mindestens einen durchzuführenden Test beziehen, über einen Verwaltungsserver (15) zur Verwaltung von authentifizierten Benutzergeräten des Informationssystems (SI) an mindestens ein authentifiziertes Benutzergerät (11, 12)
- Authentifizieren des Benutzergeräts (10) auf der Grundlage von Testergebnissen, die von dem Benutzergerät (10) über den Server (13), der das lokale Netzwerk (LAN) und das Informationssystem (SI) verbindet, empfangen werden, und von Testergebnissen, die von dem mindestens einen authentifizierten Benutzergerät (11, 12) empfangen werden, umfassend, wenn die Ergebnisse des Tests schlüssig sind, das Übertragen von Verbindungsparametern zur Verbindung mit dem mindestens einen Verwaltungsserver (15) zur Verwaltung von authentifizierten Benutzergeräten des Informationssystems (SI) über den Server (13), der das lokale Netzwerk (LAN) und das Informationssystem (SI) verbindet, an das Benutzergerät (10).

9. Computerprogrammprodukt, umfassend Programmcodeanweisungen zur Implementierung eines Verfahrens nach Anspruch 1, wenn es von einem Prozessor ausgeführt wird.

10. Computerprogrammprodukt, umfassend Programmcodeanweisungen zur Implementierung eines Verfahrens nach Anspruch 4, wenn es von einem Prozessor ausgeführt wird.

## Claims

1. Method for integrating at least one user equipment (10) of a local area network (LAN) intended to be integrated into an information system (SI), said method being implemented by a server (13) interfacing the local area network (LAN) and the information system (SI) and comprising the following steps:
- transmitting (E10), to a test server (14) of the information system (SI), items of information relating to at least one function which may be executed by said user equipment, received from said user equipment;
- receiving, from said test server, instructions associated with said at least one function and relating to at least one test to be performed by said user equipment (10) in relation to at least one authenticated user equipment (11, 12) belonging to the local area network (LAN);
- transmitting (E12), to the user equipment (10), said instructions relating to at least one test to be performed by said user equipment (10);
- receiving, from the user equipment (10), at least one result of said at least one test performed by said user equipment (10);
- transmitting said at least one result to said test server;
- receiving, from said test server, parameters for connecting to at least one server (15) for managing authenticated user equipments of the information system (SI);
- transmitting (E17), to the user equipment (10), said connection parameters.

2. Integration method according to Claim 1, wherein said items of information relating to at least one function which may be executed by said user equipment are received (E9) in response to a request (RQ1) transmitted to said user equipment.

3. Integration method according to Claim 2, wherein the transmission (E9) of the request (RQ1) is triggered by the receipt (E7) of at least one item of information about the presence of the user equipment (10) in the local area network (LAN).

4. Method for authenticating at least one user equipment (10) of a local area network (LAN) intended to be integrated into an information system (SI), said method being implemented by a test server (14) of the information system (SI) and comprising the following steps:
- receiving (E10), from a server (13) interfacing the local area network (LAN) and the information system (SI), items of information relating to at least one function which may be executed by said user equipment (10),
- determining (E11) instructions associated with said at least one function and relating to at least one test to be performed by said user equipment (10) in relation to at least one authenticated user equipment (11, 12) belonging to said local area network (LAN) depending on functions which may be executed by said user equipment (10) and by said authenticated user equipment (11, 12),
- transmitting (E12), via said server (13) interfacing the local area network (LAN) and the information system (SI), to the user equipment (10), the instructions relating to said at least one test to be performed,
- transmitting (E13), via a server (15) for managing authenticated user equipments of the information system (SI), to at least one authenticated user equipment (11, 12), the instructions relating to said at least one test to be performed,
- authenticating (E16) said user equipment (10) on the basis of test results received from said user equipment (10) via said server (13) interfacing the local area network (LAN) and the information system (SI) and of test results received from said at least one authenticated user equipment (11, 12) via said management server (15), comprising, when the results of the test are conclusive, transmitting, via said server (13) interfacing the local area network (LAN) and the information system (SI), to the user equipment (10), parameters for connecting to said at least one server (15) for managing authenticated user equipments of the information system (SI).

5. Authentication method according to Claim 4, comprising a step of determining at least one confidence parameter associated with at least one test result.

6. Authentication method according to Claim 5, wherein the confidence parameter depends on the authenticated user equipment in relation to which the test is performed.

7. Server (13) interfacing a local area network (LAN) and an information system (SI), the server (13) comprising means for:
- transmitting, to a test server (14) of the information system (SI), items of information relating to at least one function which may be executed by a user equipment, received from said user equipment;
- receiving, from said test server, instructions associated with said at least one function and relating to at least one test to be performed by said user equipment (10) in relation to at least one authenticated user equipment (11, 12) belonging to the local area network (LAN);
- transmitting, to said at least one user equipment (10), said instructions relating to at least one test to be performed by said user equipment (10);
- receiving, from the user equipment (10), at least one result of said at least one test performed by said user equipment (10);
- transmitting said at least one result to said test server;
- receiving, from said test server, parameters for connecting to at least one server (15) for managing authenticated user equipments of the information system (SI);
- transmitting, to the user equipment (10), said connection parameters.

8. Test server (14) which is capable of authenticating at least one user equipment (10) of a local area network (LAN) intended to be integrated into an information system (SI), said test server (14) belonging to the information system (SI) and comprising means for:
- receiving, from a server (13) interfacing the local area network (LAN) and the information system (SI), items of information relating to at least one function which may be executed by said user equipment (10),
- determining instructions associated with said at least one function and relating to at least one test to be performed by said user equipment (10) in relation to at least one authenticated user equipment (11, 12) belonging to said local area network (LAN) depending on functions which may be executed by said user equipment (10) and by said authenticated user equipment (11, 12),
- transmitting, via said server (13) interfacing the local area network (LAN) and the information system (SI), to the user equipment (10), instructions relating to said at least one test to be performed,
- transmitting, via a server (15) for managing authenticated user equipments of the information system (SI), to at least one authenticated user equipment (11, 12), instructions relating to said at least one test to be performed,
- authenticating said user equipment (10) on the basis of test results received from said user equipment (10) via said server (13) interfacing the local area network (LAN) and the information system (SI) and of test results received from said at least one authenticated user equipment (11, 12), comprising, when the results of the test are conclusive, transmitting, via said server (13) interfacing the local area network (LAN) and the information system (SI), to the user equipment (10), parameters for connecting to said at least one server (15) for managing authenticated user equipments of the information system (SI).

9. Computer program product comprising program code instructions for implementing a method according to Claim 1 when it is executed by a processor.

10. Computer program product comprising program code instructions for implementing a method according to Claim 4 when it is executed by a processor.
